# EUROPÄISCHE PATENTSCHRIFT

(11) **EP 0 991 803 B1**
(45) Veröffentlichungstag und Bekanntmachung des Hinweises auf die Patenterteilung: **21.11.2001**
(21) Anmeldenummer: 98934919.6
(22) Anmeldetag: 05.06.1998
(51) Int. Cl.: D04H 3/14, D04H 3/16, D04H 1/54, B31F 1/07, B29C 59/04

(54) **PRÄGEVERFAHREN ZUR HERSTELLUNG EINES STRUKTURIERTEN, VOLUMINÖSEN VLIESES**
IMPREGNATION METHOD FOR PRODUCING A STRUCTURED VOLUMINOUS NON-WOVEN FABRIC
PROCEDE DE GAUFRAGE POUR LA FABRICATION D'UN NON-TISSE STRUCTURE AYANT DU VOLUME

(30) Priorität: 18.06.1997 DE 19725749
(43) Veröffentlichungstag der Anmeldung: 12.04.2000
(73) Patentinhaber: Advanced Design Concepts GmbH, 30156 Hannover (DE)
(72) Erfinder: WAGNER, Werner, D-31542 Bad Nenndorf (DE)
(74) Vertreter: Hoffmeister, Helmut, Dr. Dipl.-Phys.
(86) Internationale Anmeldenummer: EP9803384
(87) Internationale Veröffentlichungsnummer: WO9858109

(56) Entgegenhaltungen:
- WO-A-97/02378
- WO-A-98/05813
- DE-A- 19 547 319
- US-A- 4 913 911
- US-A- 5 356 364

## Beschreibung

Die Erfindung betrifft ein Verfahren zur Herstellung eines strukturierten, voluminösen Vlieses, mit folgenden Verfahrensschritten:
(a) Herstellung eines Spinnvlieses aus einer Vielzahl von Einzelfilamenten, die lediglich im Bereich von 50 bis 70% der maximal möglichen Streckung gereckt und zu einem Faserstrang abgelegt werden,
(b) Pressen und Verschweißen des Faserstranges durch ein erstes Walzenpaar zu einem Rohvlies,
(c) Nachbearbeitung des Rohvlieses durch ein zweites Walzenpaar, bei dem wenigstens einer der Walzen-Außenmäntel aus Metall besteht und das aus einer Positivwalze mit zahlreichen, über die Walzenmantelfläche verteilten Positivkörpern und aus einer Negativwalze mit ebenso zahlreichen Vertiefungen besteht, wobei während des Walzvorganges die Positivkörper in die Vertiefungen eingreifen und das Rohvlies im Bereich der Walzeneingriffe nachrecken.

Das in der Stammanmeldung DE 195 47 319 genannte Verfahren geht aus von einem Stand der Technik gemäß US-PS 5,399,174. In dieser US-Patentschrift wird eine Schichtfolie beschrieben, bei der eine Vliesschicht, die aus gekräuselten polymerischen Faser-Bündeln besteht und mit einer polymerischen Folie laminiert wird, mit Hilfe von Walzen so geprägt wird, daß ein Verbindungs- und Ziermuster entsteht, das das Vlies mit der Folie verbindet. In der vorgenannten US-Patentschrift wird in der Beschreibungseinleitung (BACKGROUND OF THE INVENTION) auch erwähnt, daß das Walzprägen eine Verfahrensart ist, um die Haptik des Vlieses zu ändern und gleichzeitig ein dekoratives Design zu erzeugen. Hingewiesen wird unter anderem auf die US-Patentschrift 4,592,943, gemäß der ein Verfahren angewendet wird, bei dem das Vlies erwärmt wird, wenn die zu bearbeitende Vliesfolie zwischen zwei Gitter verläuft, so daß sich das Gitter in seiner bestimmten Form dem Vlies mitteilt und es sich entsprechend abbildet. Weiterhin wird auf das US-Patent 4,774,124 hingewiesen, das ein Musterwalzen-Prägeverfahren offenbart.

Bekannt ist weiterhin aus US-PS 5,356,364 ein Prägeverfahren, bei dem nicht genau übereinstimmende ("unmatched") Positiv- und Negativkörper zweier Walzen einen Prägevorgang ermöglichen, der eine besondere Flauschigkeit und Prägestruktur ermöglichen soll.

Den vorgenannten Verfahren ist gemeinsam, daß von vornherein eine voluminöse Vliesschicht erzeugt werden muß, die dann mit Hilfe des Prägeverfahrens gemustert wird. Die Vliesschicht nimmt jedoch in ihrem Volumen nicht zu.

Aufbauend auf der Lehre der deutschen Patentanmeldung 195 47 319 stellt sich die Aufgabe, ein Spinnvlies, das bereits abgelegt und auch entsprechend dem Vliesverfahren bereits partiell gebundene Fasern und Filamente aufweist, mit einer definierten Volumenvergrößerung zu versehen.

Im Rahmen des Schrittes (c) gemäß Oberbegriff des Anspruches 1 erfolgt die Nachbearbeitung durch Verwendung eines zweiten Walzenpaares, bei dem die Außenmäntel der Walzen aus Metall, vorzugsweise eines auf beiden Walzen gleichen Metalles mit einer Rockwellhärte (HRC) größer als 50 bestehen, bei dem die Positivkörper der Positivwalze in Reihen angeordnete Noppen sind und bei dem die Oberfläche der Negativwalze in Achsenrichtung angeordnete Lamellenstege mit dazwischenliegenden Vertiefungen aufweist. Durch die sich über mehrere Noppenabstände erstreckenden, axial angeordneten Lamellen, wird bei einer 70%igen Vorstreckung eine verbesserte Streckung erreicht, insbesondere eine besondere Struktur, die sich an den Noppenspitzen öffnet und in der Fachsprache als "apperturized non woven" bezeichnet wird.

Die Öffnungen sind strukturiert entsprechend der Geometrie der metallenen Noppen. Je nach Umfang der Noppen erhält man eine stärkere Vliesöffnung und -perforierung. Die Öffnungen zeigen dabei eine nach der Rückseite des Vliesstoffes ausgestülpte Formgebung. Zur Gebrauchsseite hin wirken die Öffnungen wie feine Trichter, die auch Flüssigkeit aufnehmen und weiterleiten. Für ein entsprechendes Coverstock-Material wird dieser Effekt gewünscht, da Flüssigkeit aufgenommen und abgeführt werden kann. Durch die dreidimensionale Struktur, die das Vlies angenommen hat, wird zu dem verhindert, daß sich die Flüssigkeit wieder an die Oberfläche begibt. Diese Oberfläche bleibt trocken. Darüberhinaus ergibt sich für die Außenseiten des Vliesstoffes ein weicher, textiler und nachgiebiger Griff.

Mit dem zweiten Walzenpaar kann die Flauschigkeit und die Struktur des Endproduktes weitgehend bestimmt werden. So wird vorgeschlagen, daß der Abstand der Walzen des zweiten Walzenpaares und damit das gegenseitige Eindringen der Walzen eingestellt wird. Es werden vorzugsweise Walzen in einer Höhe der Noppen zwischen 0,8 und 2 mm verwendet, wobei die Zahl der Noppen auf 100 cm² Walzenoberfläche zwischen 2000 und 3000 gewählt wird.

Auch die Temperatur der Walzen ist von Bedeutung. Es wird beispielsweise mit einer Negativwalze mit niedrigerer Temperatur als die Positivwalze gearbeitet. Beispiele sind, daß die Temperatur der Positivwalze zwischen 175° C und 190° C und die der Negativwalze nur zwischen 40° und 80° C ist.

Um eine trichterartige Struktur des Vlieses zu erreichen, wird vorgeschlagen, daß die Noppen in einer Spitze auslaufen, wobei die Spitze beispielsweise zwiebelturmartig ist, das heißt gerundet und in einer Spitze auslaufend kontrolliert ist. Es ist aber auch möglich, die Spitze in einer Pyramide mit einem spitzen Winkel von 90 ± 20° auslaufen zu lassen.

Als Ausgangsmaterial für die Vliesherstellung wird vorzugsweise ein Polyethylen, ein Polypropylen, ein Polyester oder Polyamid verwendet, da diese Thermoplasten die erwünschte Flauschigkeit in besonders ausgeprägter Weise zeigen.

Als Vliesherstellungsverfahren eigenen sich die üblichen; als Vliesstoffe werden beispielsweise solche verwendet werden, die nach dem Kardierverfahren, nach dem Airlaidverfahren oder nach dem Melt-Blown hergestellt wurden.

Vorzugsweise wird während des zweiten Reckens der Rohvliesstrang seitlich an den Walzenrändern straff gehalten, so daß er nicht einspringt. Während des zweiten Reckens, das heißt während des ersten Durchlaufes des Rohvliesstranges durch das zweite Walzenpaar, wird dieser auf einer Temperatur gehalten, die im wesentlichen der Temperatur gleicht, die während des ersten Reckens herrscht. Die Walzentemperatur wird also etwa oberhalb und unterhalb dieser Temperatur gehalten.

Die Erfindung bezieht sich ferner auf ein Walzenpaar, bei dem die Außenmäntel der Walzen aus Metall bestehen, bei dem die Positivkörper der Positivwalze in Reihen angeordnete Noppen sind und bei dem die Oberfläche der Negativwalze in Achsenrichtung angeordnete Lamellenstege mit dazwischenliegenden Vertiefungen aufweist, so daß beim Abwälzen der Walzen gegeneinander die Lamellen in die von den Noppen freigehaltenen Gassen eingreifen, wobei die Länge der Lamellenstege wenigstens drei Noppenabstände übertrifft.

Ein Ausführungsbespiel der Erfindung wird anhand eines Beispieles erläutert. Hierzug wird die Zeichnung herangezogen. Die Figuren der Zeichnung zeigen:
- Fig. 1: in schematischer Darstellung eine für das Verfahren geeignete Einrichtung;
- Fig. 2a: im Detail eine Ausführungsform der Reckprofilwalzen;
- Fig. 2b: in weiterem Detail eine Ausführungsform der Reckprofilwalzen gem.Fig. 2a;
- Fig. 3: in vergrößerter Darstellung eine perspektivische Daufsicht auf ein nach dem Verfahren hergestelltes Produkt.

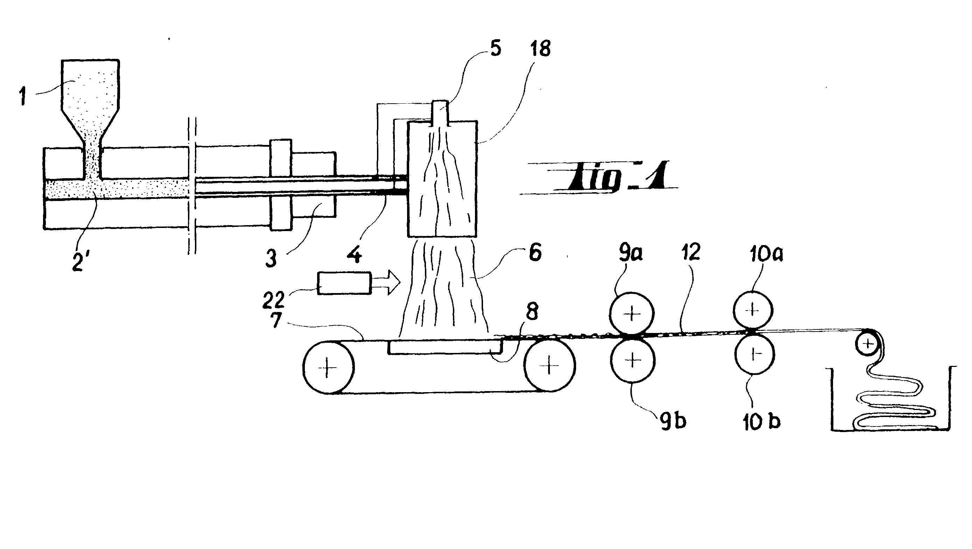

In Fig. 1 ist schematisch der Werdegang eines strukturierten, voluminösen Vlieses dargestellt. In einem Vorratssilo 1 ist ein thermoplastisches Granulat, beispielsweise aus einem entsprechend seinem Vlies verarbeitbaren Polyethylen, Polyester, Polypropylen oder Polyamid, enthalten. Es gelangt in einen beheizbaren Extruder und wird von der Extruderschnecke 2' bis zum Mundstück 3 des Extruders vorgetrieben. Anschließend wird das Extrudat über einen Führungsrüssel 4 in eine Spinndüse 5 eingespeist. Aus der Spinndüse 5 gelangt ein in feinste Fäden aufgeteilter Spinnstrang in eine Reckvorrichtung 18 und anschließend in den Bereich eines Abschreckgebläses 22, mit dem der gereckte Spinnstrang 6 abgekühlt wird.

In der Reckvorrichtung 18 wird die Einzelfaser nicht voll verstreckt. Lediglich ein Verstreckungsgrad von 60 bis 70 % bei Polyethylen und Polypropylen bzw. von 50 bis 70 % bei Polyester oder Polyamid ist vorteilhaft. Dies ist im Gegensatz zu den sonst üblichen Reckbedingungen, die eine möglichst volle Prozeßverstreckung schon aus Materialersparnisgründen vorziehen.

Der gereckte Spinnstrang 6 wird auf einen Netzförderer 7 gegeben, der mit einem Vakuumrahmen 8 unterlegt ist, so daß sich der Spinnstrang flach auf den Netzförderer 7 auflegt. Er wird dann zwischen einem ersten Walzenpaar, nämlich Kalanderwalzen 9a und 9b, komprimiert. Nach dieser Bearbeitung erhält man ein Rohvlies 12; dieses hat noch ein Flächengewicht von etwa 20 g/m² und ist nur wenige Millimeter dick.

Das so gebildete Rohvlies 12 hat in den Kalanderwalzen 9a/b nur eine sehr lockere Vliesverfestigung erhalten. Eine örtliche Verschmelzung ist nur leicht vorgenommen worden, da hierdurch die Materialbehandlung erleichtert wird.

Das Rohvlies 12 wird nunmehr einem zweiten Walzenpaar 10a, 10b zugeführt, das durch zwei Reckprofilwalzen gebildet wird. Die Walze 10a ist eine Positivwalze mit zahlreichen, über die Walzenmantelfläche verteilten Noppen 11, während die Negativwalze 10b mit ebenso zahlreichen Lamellen 13 mit daziwschenliegenden Vertiefungen 14 versehen ist. Während des Walzvorganges greifen die Noppen 11 in die Vertiefungen 14 ein und recken das Rohvlies im Bereich des Eingriffes nach.

Mit dem Recken durch die beiden Walzen 10a und 10b ist eine genau definierte, örtliche Überdehnung des Faserverbundes gegeben, da der Rohstrang 12 am Rande, d. h. an den Außenkanten der Walzen 10a/b festgehalten wird und nicht nach innen hineingezogen werden kann. Das Vlies wird demnach örtlich gehalten und unmittelbar daneben extrem gedehnt. Entsprechend der Ausbildung der Walzen kann auch auf eine seitliche Festhaltung verzichtet werden.

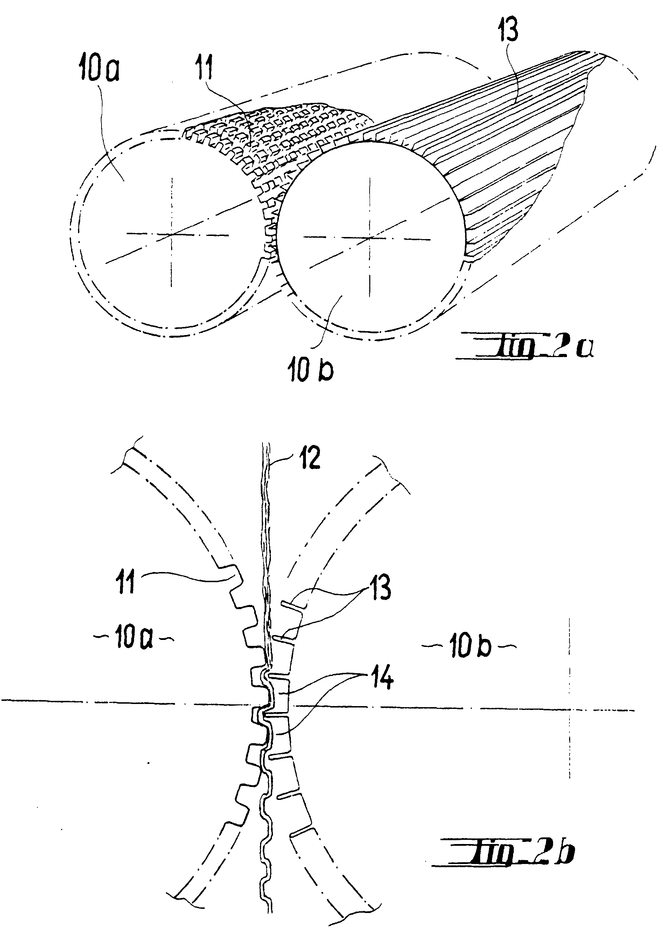

Wie Figuren 2a und 2b zeigen, ist der Mantel der Reckprofilwalzen 10a und 10b so beschaffen, daß der erhabene Teil, d. h. die Noppen 11, in die freien Räume 14 zwischen den Lamellen 13 der Gegenwalze 10b vorstoßen, während die flache Zone des Prägewerkzeuges das Teil des streckfähigen Vliesstoffes festhält. Walze und Gegenwalze sind exakt aufeinander eingestellt. Die Noppen 11 sind als abgestupfte Pyramiden dargestellt. Sie können auch rund und jeweils angespitzt sein. Insbesondere eignet sich eine Konfiguration, bei der die Spitze zwiebelturmartig ausläuft.

Die Lamellen haben nur eine Breite von etw 1/3 bis 1/5 der freien Abstände der Noppen. Sie erstrecken sich im Ausführungsbeispiel über die ganze Walzenlänge. Sie können jedoch auch kürzer und unterbrochen sein. Die Lammellenlänge überbrückt jedoch immer eine größere Anzahl von Noppenabständen, und zwar wenigstens drei Noppenabstände.

Die Walze 10a ist mit einem Mantel oder einer Beschichtung aus Stahl versehen. Auch die Noppen 11 bestehen aus Stahl. Der Mantel der Walze 10b ist ebenfalls aus Stahl gefertigt. Als Stahl wird ein solcher mit einer Rockwellhärte von 62 verwendet (vgl. Meßmethoden KLINGELNBERG, Technisches Hilfsbuch, Springer-Verlag, 1967, 15. Auflage).

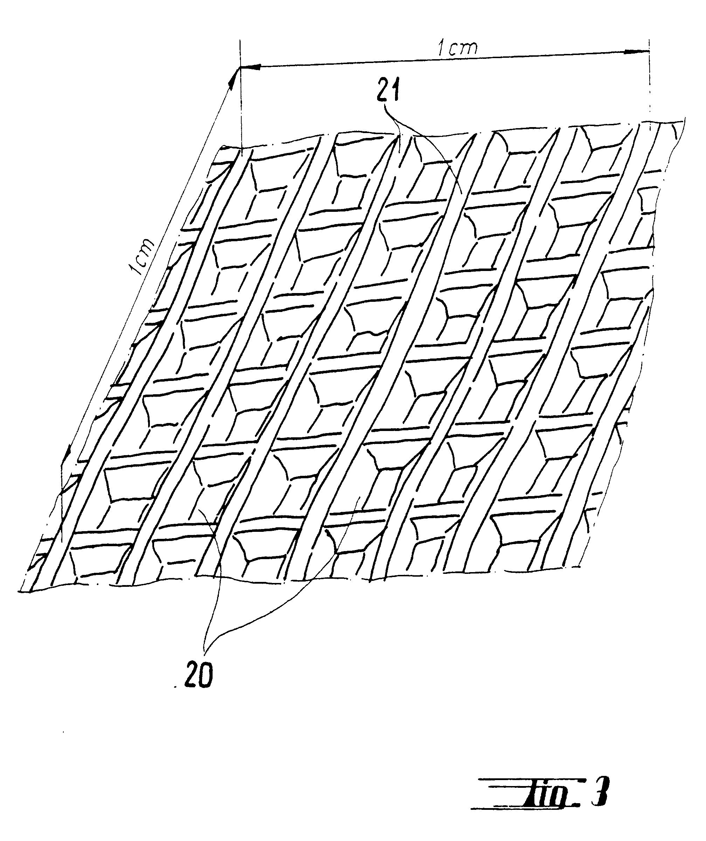

Das aus den Walzen 10a/b herauskommende Vlies 15 hat durch das örtliche Nachstrecken nicht nur in seiner Faserlänge, sondern auch in seinem Vliesstoffgefüge eine starke Veränderung erfahren. Das Rohvlies erhält durch das entsprechende Walzendesign eine Struktur mit dreidimensionalem Charakter, gemäß Figur 3, wie noch im folgenden beschrieben werden wird.

Die Einzelfaser wird im Ausdehnungsbereich hochfest, so daß der Volumencharakter auch dauerbeständig ist. Der Griff des ganzen Vlieses wird deutlich weicher und nachgiebiger und zeigt einen veränderten Wassertransport-Vektor. Die Feuchtigkeit wird von der Oberfläche nach der Vliesrückseite entlang den hochstehenden Endlosfasern transportiert.

Der Abstand der Walzen des zweiten Walzenpaares und damit das gegenseitige Eindringen der Walzen ist, wie an sich aus der Walzentechnologie bekannt, gegeneinander einstellbar. Die Höhe der Noppen beträgt im vorliegenden Falle etwa 1,5 mm, wobei der gegenseitige Abstand der Noppen bei etwa 1,5 mm liegt. Die Anzahl der Noppen ist auf 100 cm² 2500. Es wird beispielsweise ein aus Spinnvlies bestehenden Coverstockmaterial hergestellt, in dem man im gleichen Arbeitsgang Polypropylen-Fasern mit einer Dichte von 7 Gramm pro cm² auf ein Transportband ablegt und im gleichen Durchgang meltblown-Polypropylen in einer Menge von 2 x 3 g pro cm³ aufschichtet und das Ganze mit einer weiteren Lage von 7 g pro cm² Polypropylen-Spinnvlies abdeckt. Dieser Verbund wird zunächst der Walzeneinrichtung zugeführt und punktförmig verbunden. Das vorverfestigte Spinnvlies auf Polypropylen-Basis wird dann dem zweiten Walzenpaar zugeführt und bei einer Noppenwalzentemperatur von 175° C und einer Lamellenwalzentemperatur von 80° C perforiert und umgeformt.

Gemäß Fig. 3 ergibt sich ein Folienmaterial, das pro Zentimeter etwa fünf durch Noppen geformte trichterförmige Vertiefungen 20 aufweist, zwischen denen jeweils eine ebene Fläche 21 verbleibt. Die Höhe des Vlieses, das heißt die Tiefe der "Becher" beträgt etwa 1 mm. Das Material ist im Bereich der Noppen am Grunde perforiert und voll ausgeprägt und kann daher im Hygienebereich, beispielsweise als Coverstock bei der Windelherstellung oder als Deckschicht bei der Herstellung von Produkten wie Damenhygiene, Verwendung finden.

Die Noppenform, die hierbei zur Strukturierung geführt hat, ist pyramidenförmig mit einem rechteckigen Grundriss und einem Spitzenwinkel von 90°. Das beschriebene Verfahren kann auch online mit der Spinnvliesherstellung erfolgen. Es kann aber auch ein Rohvlies getrennt hergestellt und nachverarbeitet werden. Es ist auch noch ein Zweitvlies oder eine Folie an das gebauschte Vlies zu kaschieren.

Das vorgenannte Verfahren kann im Prinzip, ähnlich wie die Stammanmeldung, bei allen Kunststoffen wie Polyethylen, Polyester, Polypropylen, Polyamid und dergleichen Anwendung finden, die sich für das Schmelzspinnverfahren mit einem Vorreckgang eignen.

Das vorgenannte Verfahren eignet sich im Prinzip dazu, Vliese aller üblichen Herstellungsarten zu verwenden und zu bearbeiten, darunter Vliesstofe, die nach dem Kardierverfahren, nach dem Airlaidverfahren oder nach dem Melt-Blown-Verfahren hergestellt worden sind.

Vliesstoffe, die nach dem Kardierverfahren oder dem Airlaidverfahren aus Stapelfasern herstellt worden sind, werden durch Einsatz einer Krempel oder Karde aus Stapelfasern, also geschnittenen Fasern einer Schnittlänge von ca. 3 bis 6 cm aus Fasern von ca. 2 bis 5 den hergestellt, leicht vorgeprägt und dann dem Umformungsprozeß gemäß Erfindung unterzogen.

Bei den Airlaid-Vliesstoffen werden die Stapelfasern durch einen Luftstrom transportiert und in feiner Vliesform auf einer Siebtrommel abgelegt. Dieses durch Prägung vorgefestigte Vlies wird dann dem Umformungsprozeß gemäß Erfindung unterzogen.

Stapelfaservliesstoffe lassen sich umformen, weil sie noch eine ausreichende Restdehnfähigkeit haben, die aus der Verschiebbarkeit der Stapelfasern und ihrer Kräuselung herrührt. Krempel- und Airlaidvliesstoffe kommen in Gewichtslagen von 15g/m² bis 30g/m², gegebenenfalls auch in noch höheren FLächengewichten, zum Einsatz.

Meltblown-Vliestoffe werden aus einer Polymerschmelze gewonnen, indem man bei Austritt aus der Spinndüse den austretenden Tropfen in feinste Einzelfasern zerreißt. Die Einzelfasern werden vom Luftstrom mitgerissen und auf einem Transportband in Vliesform abgelegt. Meltblown-Fasern sind sehr fein und weich. Wegen ihrer nicht ausreichenden Festigkeit werden sie oft mit anderen Vliesen verbunden. Im Hygienebereich ergeben sich für nach dem Verfahren der Erfindung Anwendungsmöglichkeitenvon Meltblown-Vliesen allein als auch in Verbindung mit anderen Vliesen. Insbesondere kann ein Vliestoff aus Meltblown-Fasern mit einem Flächengewicht von 10g/m² bis 20g/m² gut umgeformt werden.

## Patentansprüche

1. Verfahren zur Herstellung eines strukturierten, voluminösen Vlieses, mit folgenden Verfahrensschritten:
(a) Herstellung eines Spinnvlieses aus einer Vielzahl von Einzelfilamenten, die lediglich im Bereich von 50 bis 70% der maximal möglichen Streckung gereckt und zu einem Faserstrang abgelegt werden,
(b) Pressen und Verschweißen des Faserstranges durch ein erstes Walzenpaar (9a, b) zu einem Rohvlies (12),
(c) Nachbearbeitung des Rohvlieses durch ein zweites Walzenpaar (10a, b), bei dem wenigstens einer der Walzen-Außenmäntel aus Metall besteht und das aus einer Positivwalze (10a) mit zahlreichen, über die Walzenmantelfläche verteilten Positivkörpern (11) und aus einer Negativwalze (10b) mit ebenso zahlreichen Vertiefungen (12) besteht, wobei während des Walzvorganges die Positivkörper in die Vertiefungen eingreifen und das Rohvlies im Bereich der Walzeneingriffe nachrecken,
**gekennzeichnet durch** Verwendung eines zweiten Walzenpaarens (10a,10b), bei dem die Außenmäntel der Walzen aus Metall bestehen, bei dem die Positivkörper der Positivwalze in Reihen angeordnete Noppen (11) und bei dem die Oberfläche der Negativwalze in Achsenrichtung angeordnete Lamellenstege (13) mit dazwischenliegenden Vertiefungen (14) aufweisen, so daß beim Abwälzen der Walzen gegeneinander die Lamellen in die von den Noppen freigehaltenen Gassen eingreifen, wobei das Vlies örtlich gehalten und und unmittelbar daneben gedehnt wird.

2. Verfahren nach Anspruch 1, **dadurch gekennzeichnet, daß** die Walzen des Walzenpaares aus Metall im wesentlichen gleicher Härte mit einer Rockwellhärte (HRC) größer als 50 bestehen.

3. Verfahren nach Anspruch 1, **dadurch gekennzeichnet, daß** der Abstand der Walzen des zweiten Walzenpaares und damit das gegenseitige Eindringen der Walzen eingestellt wird.

4. Verfahren nach Anspruch 1 bis 3, **dadurch gekennzeichnet, daß** die Höhe der Noppen zwischen 0,8 und 2 mm ist.

5. Verfahren nach Anspruch 1 bis 4, **dadurch gekennzeichnet, daß** der gegenseitige Abstand der Noppen bei linearer Aufreihung zwischen 1 und 2.5 mm liegt.

6. Verfahren nach Anspruch 1 bis 5, **dadurch gekennzeichnet, daß** die Zahl der Noppen auf 100 cm² Walzenoberfläche zwischen 2000 und 3000 liegt.

7. Verfahren nach Anspruch 1 bis 6, **dadurch gekennzeichnet, daß** die Temperatur der Walzen (10a,10b) des zweiten Walzenpaares verschieden hoch eingestellt wird.

8. Verfahren nach Anspruch 3, **dadurch gekennzeichnet, daß** die Temperatur der Negativwalze auf eine um wenigstens 20° C niedrigere Temperatur als die der Positivwalze eingestellt wird.

9. Verfahren nach wenigstens einem der vorhergehenden Ansprüche, **dadurch gekennzeichnet, daß** während des zweiten Reckens der Rohvliesstrang auf einer Temperatur gehalten wird, die im wesentlichen der Temperatur gleicht, die während des ersten Reckens herrschte.

10. Verfahren nach wenigstens einem der vorhergehenden Ansprüche, **dadurch gekennzeichnet, daß** die Noppen in einer Spitze auslaufen.

11. Verfahren nach Anspruch 10, **dadurch gekennzeichnet, daß** die Spitze zwiebelturmartig ist.

12. Verfahren nach Anspruch 11, **dadurch gekennzeichnet, daß** die Spitze in einer Pyramide mit einem Spitzenwinkel von 90° ± 20° ausläuft.

13. Verfahren nach wenigstens einem der vorhergehenden Ansprüche, **dadurch gekennzeichnet, daß** als Ausgangsmaterial für die Vliesherstellung ein Polyethylen, Polypropylen oder Polyamid verwendet wird.

14. Verfahren nach wenigstens einem der vorhergehenden Ansprüche, **dadurch gekennzeichnet, daß** als Vliesstoffe solche verwendet werden, die nach dem Kardierverfahren, nach dem Airlaidverfahren oder nach dem Melt-Blown hergestellt wurden.

15. Verfahren nach wenigstens einem der vorhergehenden Ansprüche, **dadurch gekennzeichnet, daß** während des zweiten Reckens der Rohvliesstrang (12) seitlich an den Walzenrändern straff gehalten wird.

16. Verfahren nach Anspruch 1, **dadurch gekennzeichnet, daß** das in den Vertiefungen erfolgende zweite Recken zu einer erheblichen Verdünnung, gegebenenfalls bis zur Perforierung des Rohvlieses im Bereich der Walzeneingriffe führt.

17. Walzenpaar zur Durchführung des Verfahrens nach wenigstens einem der vorhergehenden Ansprüche, **dadurch gekennzeichnet, daß** bei dem zweiten Walzenpaar (10a,10b) die Außenmäntel der Walzen aus Metall bestehen,die Positivkörper der Positivwalze in Reihen angeordnete Noppen sind und die Oberfläche der Negativwalze in Achsenrichtung angeordnete Lamellenstege mit dazwischenliegenden Vertiefungen aufweisen, so daß beim Abwälzen der Walzen gegeneinander die Lamellen in die von den Noppen freigehaltenen Gassen eingreifen.

18. Walzenpaar nach Anspruch 17, **dadurch gekennzeichnet, daß** die Walzen des Walzenpaares aus Metall im wesentlichen gleicher Härte mit einer Rockwellhärte (HRC) größer als 60 bestehen.

19. Walzenpaar nach Anspruch 17, **dadurch gekennzeichnet, daß** der Abstand der Walzen des zweiten Walzenpaares und damit das gegenseitige Eindringen der Walzen eingestellt wird.

20. Walzenpaar nach Anspruch 17 bis 19, **dadurch gekennzeichnet, daß** die Höhe der Noppen zwischen 0,8 und 2 mm ist.

21. Walzenpaar nach Anspruch 17 bis 20, **dadurch gekennzeichnet, daß** der gegenseitige Abstand der Noppen bei linearer Aufreihung zwischen 1 und 2.5 mm liegt.

22. Walzenpaar nach Anspruch 17 bis 21, **dadurch gekennzeichnet, daß** die Zahl der Noppen auf 100 cm² Walzenoberfläche zwischen 2000 und 3000 liegt.

23. Walzenpaar nach wenigstens einem der vorhergehenden Ansprüche, **dadurch gekennzeichnet, daß** die Noppen in einer Spitze auslaufen.

24. Walzenpaar nach Anspruch 23, **dadurch gekennzeichnet, daß** die Spitze zwiebelturmartig ist.

25. Walzenpaar nach Anspruch 24, **dadurch gekennzeichnet, daß** die Spitze in einer Pyramide mit einem Spitzenwinkel von 90° ± 20° ausläuft.

## Claims

1. A method of producing a structured voluminous nonwoven with the following steps:
(a) producing a spun nonwoven from a number of individual filaments stretched to only 50 to 70% of the maximum possible stretch and laid into a fibre strand,
(b) pressing and welding the fibre strand in a first pair of rollers (9a, b) to form a crude nonwoven (12),
(c) finishing the crude nonwoven in a second pair of rollers (10a, b) wherein at least one roller shell is of metal and the pair comprising a positive roller (10a) with numerous positive members (11) distributed over the shell surface and a negative roller (10b) with an equal number of recesses (12), and during the rolling operation the positive members engage in the recesses and additionally stretch the crude nonwoven in the region of roller engagement,
**characterised by** use of a second pair of rollers (10a, 10b) wherein the roller shells are of metal, wherein the positive members on the positive roller are knobs (11) arranged in rows and wherein the surface of the negative roller comprises multiple webs (13) disposed in the axial direction and with recesses (14) in between, so that when the rollers roll on one another the webs engage in the lanes left free from knobs, wherein the nonwoven is locally held and stretched immediately afterwards.

2. A method according to claim 1, **characterised in that** the pair of rollers are of metal having substantially the same hardness, with a Rockwell hardness (HRC) greater than 50.

3. A method according to claim 1, **characterised in that** the distance between the rollers in the second pair and consequently the interpenetration of the rollers is adjusted.

4. A method according to claims 1 to 3, **characterised in that** the height of the knobs is between 0.8 and 2 mm.

5. A method according to claims 1 to 4, **characterised in that** the distance between knobs in a line is between 1 and 2.5 mm.

6. A method according to claims 1 to 5, **characterised in that** the number of knobs is between 2000 and 3000 per 100 cm² of roller surface.

7. A method according to claims 1 to 6, **characterised in that** the rollers (10a, 10b) in the second pair are given different temperatures.

8. A method according to claim 3, **characterised in that** the negative roller is adjusted to a temperature at least 20° lower than the positive roller.

9. A method according to at least one of the preceding claims, **characterised in that** during the second stretching the crude nonwoven strand is kept at a temperature substantially equal to the temperature during the first stretching.

10. A method according to at least one of the preceding claims, **characterised in that** the knobs end in a point.

11. A method according to claim 10, **characterised in that** the point has the shape of an onion tower.

12. A method according to claim 11, **characterised in that** the point ends in a pyramid with an apex angle of 90° ± 20°.

13. A method according to at least one of the preceding claims, **characterised in that** the starting material used for producing the nonwoven is a polyethylene, polypropylene or polyamide.

14. A method according to at least one of the preceding claims, **characterised in that** the materials for making the nonwoven are produced by carding or by the air-laid or melt-blown method.

15. A method according to at least one of the preceding claims, **characterised in that** during the second stretching the sides of the crude nonwoven strands (12) are held taut on the edges of the rollers.

16. A method according to claim 1, **characterised in that** the second stretching in the recesses results in a considerable thinning, if required until the crude nonwoven is perforated in the roller engagement region.

17. A pair of rollers for working the method according to at least one of the preceding claims, **characterised in that** in the second pair of rollers (10a, 10b) the roller shells are of metal, the positive members on the positive roller are knobs arranged in rows and the surface of the negative roller comprises multiple webs disposed in the axial direction and with intermediate recesses, so that when the rollers roll on one another the webs engage in the lanes left free from knobs.

18. A pair of rollers according to claim 17, **characterised in that** the rollers are made of metal having substantially the same hardness, with a Rockwell hardness (HRC) greater than 60.

19. A pair of rollers according to claim 17, **characterised in that** the distance between the rollers in the second pair and consequently the interpenetration of the rollers is adjusted.

20. A pair of rollers according to claims 17 to 19, **characterised in that** the height of the knobs is between 0.8 and 2 mm.

21. A pair of rollers according to claims 17 to 20, **characterised in that** the distance between the knobs in a line is between 1 and 2.5 mm.

22. A pair of rollers according to claims 17 to 21, **characterised in that** the number of knobs is between 2000 and 3000 per 100 cm² of roller surface.

23. A pair of rollers according to at least one of the preceding claims, **characterised in that** the knobs end in a point.

24. A pair of rollers according to claim 23, **characterised in that** the point has the shape of an onion tower.

25. A pair of rollers according to claim 24, **characterised in that** the point ends in a pyramid with an apex angle of 90° ± 20°.

## Revendications

1. Procédé de fabrication d'un non-tissé structuré en volume, comportant les étapes opératoires suivantes :
(a) fabrication d'un spun à partir d'une pluralité de monofilaments qui sont étirés à seulement 50 à 70% de l'allongement maximal et sont étalés en un faisceau de fibres,
(b) compression et soudage du faisceau de fibres par une première paire de cylindres (9a, b) pour former un voile brut (12),
(c) reprise du voile brut par une seconde paire de cylindres (10a, b) dans laquelle au moins une des enveloppes extérieures des cylindres est en métal et qui est constituée d'un cylindre positif (10a) pourvu de nombreux éléments positifs (11) répartis sur la surface d'enveloppe du cylindre, et d'un cylindre négatif (10b) pourvu de cavités (14) également nombreuses, les éléments positifs s'engageant dans les cavités pendant le travail des cylindres et étirant encore le voile brut dans la région d'engagement des cylindres,
**caractérisé par** l'utilisation d'une seconde paire de cylindres (10a, 10b) dans laquelle les enveloppes extérieures des cylindres sont en métal, dans laquelle les éléments positifs du cylindre positif sont constitués par des rangées de noppes (11) et dans laquelle la surface du cylindre négatif comporte des lamelles saillantes (13) disposées dans la direction axiale et séparées par des cavités (14) de sorte que lorsque les cylindres se déplacent l'un par rapport à l'autre, les lamelles s'engagent dans les espacements libres entre les noppes, le voile étant tenu localement et étiré immédiatement à côté.

2. Procédé selon la revendication 1, **caractérisé en ce que** les cylindres de la paire de cylindres sont constitués d'un métal d'une dureté sensiblement identique, avec une dureté Rockwell (HRC) supérieure à 50.

3. Procédé selon la revendication 1, **caractérisé en ce que** l'écartement des cylindres de la seconde paire de cylindres et partant, l'engagement mutuel des cylindres, est réglé.

4. Procédé selon les revendications 1 à 3, **caractérisé en ce que** la hauteur des noppes est comprise entre 0,8 et 2 mm

5. Procédé selon les revendications 1 à 4, **caractérisé en ce que** l'écartement mutuel des noppes, en cas d'alignement linéaire de celles-ci, est compris entre 1 et 2,5 mm.

6. Procédé selon les revendications 1 à 5, **caractérisé en ce que** le nombre des noppes sur 100 cm2 de surface de cylindre est compris entre 2000 et 3000.

7. Procédé selon les revendications 1 à 6, **caractérisé en ce que** la température des cylindres (10a, 10b) de la seconde paire de cylindres est réglée à des niveaux différents.

8. Procédé selon la revendication 3, **caractérisé en ce que** le cylindre positif est réglé à une température inférieure d'au moins 20°C à celle du cylindre positif.

9. Procédé selon au moins une des revendications précédentes, **caractérisé en ce que** pendant le second étirage, le faisceau de voile brut est maintenu à une température qui est sensiblement identique à celle qui règne pendant le premier étirage.

10. Procédé selon au moins une des revendications précédentes, **caractérisé en ce que** les noppes se terminent en pointe.

11. Procédé selon la revendication 10, **caractérisé en ce que** la pointe est en forme de clocher bulbeux.

12. Procédé selon la revendication 11, **caractérisé en ce que** la pointe se termine en pyramide avec un angle au sommet de 90° ± 20°.

13. Procédé selon au moins une des revendications précédentes, **caractérisé en ce que** comme matière première pour la fabrication du voile, on utilise de préférence un polyéthylène, un polypropylène, un polyester ou un polyamide.

14. Procédé selon au moins une des revendications précédentes, **caractérisé en ce qu'**on utilise comme non-tissés des non-tissés qui ont été fabriqués par cardage, par voie aérodynamique (Air-laid) ou par voie fondue soufflée (Meltblown).

15. Procédé selon au moins une des revendications précédentes, **caractérisé en ce que** pendant le second étirage, le faisceau de voile brut (12) est tendu sur le côté au niveau des bords des cylindres.

16. Procédé selon la revendication 1, **caractérisé en ce que** le second étirage effectué dans les creux produit un amincissement considérable, allant éventuellement jusqu'à une perforation du voile brut dans la région d'engagement des cylindres.

17. Paire de cylindres pour la mise en oeuvre du procédé selon au moins une des revendications précédentes, **caractérisée en ce que** dans la seconde paire de cylindres (10a, 10b), les enveloppes extérieures sont en métal, les éléments positifs du cylindre positif sont constitués par des rangées de noppes et la surface du cylindre négatif comporte des lamelles saillantes disposées dans la direction axiale et séparées par des cavités de sorte que lors du déplacement des cylindres l'un par rapport à l'autre, les lamelles s'engagent dans les espacements libres entre les noppes.

18. Paire de cylindres selon la revendication 17, **caractérisée en ce que** les cylindres de la paire de cylindres sont constitués d'un métal d'une dureté sensiblement identique, avec une dureté Rockwell (HRC) supérieure à 60.

19. Paire de cylindres selon la revendication 17, **caractérisée en ce que** l'écartement des cylindres de la seconde paire de cylindres et partant, l'engagement mutuel des cylindres, est réglé.

20. Paire de cylindres selon les revendications 17 à 19, **caractérisée en ce que** la hauteur des noppes est comprise entre 0,8 et 2 mm.

21. Paire de cylindres selon les revendications 17 à 20, **caractérisée en ce que** l'écartement mutuel des noppes, en cas d'alignement linéaire de celles-ci, est compris entre 1 et 2,5 mm.

22. Paire de cylindres selon les revendications 17 à 21, **caractérisée en ce que** le nombre des noppes sur 100 cm2 de surface de cylindre est compris entre 2000 et 3000.

23. Paire de cylindres selon au moins une des revendications précédentes, **caractérisée en ce que** les noppes se terminent en pointe.

24. Paire de cylindres selon la revendication 23, **caractérisée en ce que** la pointe est en forme de clocher bulbeux.

25. Paire de cylindres selon la revendication 24, **caractérisée en ce que** la pointe se termine en pyramide avec un angle au sommet de 90° ± 20°.
